# EUROPEAN PATENT APPLICATION

(11) **EP 4 654 133 A1**
(43) Date of publication of application: **26.11.2025**
(21) Application number: 23917572.2
(22) Date of filing: 20.01.2023
(51) Int. Cl.: G06T 11/00

(54) **PSEUDO BLOOD VESSEL PATTERN GENERATION DEVICE AND PSEUDO BLOOD VESSEL PATTERN GENERATION METHOD**

(71) Applicant: Fujitsu Frontech Limited, Inagi-shi, Tokyo 206-8555 (JP)
(72) Inventor: SUNAGAWA, Shoya, Inagi-shi, Tokyo 206-8555 (JP)
(74) Representative: Haseltine Lake Kempner LLP
(86) International application number: PCT/JP2023/001803
(87) International publication number: WO 2024/154359

(57) **Abstract**

In a pseudo-vascular pattern generator (10), a processor (11) is configured: to generate a first random number based on a first random seed and to generate a second random number based on a second random seed that is different from the first random seed; to generate a first image by adding first noise that is based on the first random number to a gray image; to generate a second image by adding second noise that is based on the second random number to the gray image; to generate a third image by combining the first image and the second image; and to generate a pseudo-vascular pattern image that is an image including a pseudo-vascular pattern by using the third image.

## Description

### Technical Field

The present disclosure relates to a pseudo-vascular pattern generator and a pseudo-vascular pattern generating method.

### Background Art

Developments of biometric authentication algorithms or biometric authentication systems based on vascular patterns require an enormous amount of vascular pattern data. Conventionally, in the developments of biometric authentication algorithms or biometric authentication systems, vascular patterns (hereinafter sometimes referred to as "actual vascular pattern") extracted from images acquired by capturing images (hereinafter sometimes referred to as "captured image") of actual biological bodies have been used. However, if an enormous amount of actual vascular patterns are to be obtained by capturing images of actual biological bodies, enormous time and costs become needed to collect such actual vascular patterns. Furthermore, if images of actual bodies are to be captured, because actual vascular patterns extracted from the captured images acquired by capturing images of actual biological bodies are data by which individuals are identifiable, it is difficult to store the actual vascular patterns in a storage, due to the restrictions by contracts with the individuals and regulations of local authorities. Therefore, pseudo-vascular patterns are needed, as a substitute for the actual vascular patterns.

As one known example, there have been a method for generating pseudo-vascular patterns on the basis of patterns of the wings of drosophilidae, or on the basis of a mathematical model such as a reaction-diffusion equation that uses Turing patterns.

### Citation List

### Non Patent Literature

Non Patent Literature 1: M. Satoh, IMA SUGU HAJIMERU SUURI SEIMEI KAGAKU, ISBN: 4339067628, pp. 176-193, CORONA PUBLISHING CO., LTD., 2020. (Date of Publication: Jan. 8, 2021)

### Summary of invention

### Technical Problem

However, the pseudo-vascular patterns generated on the basis of such a mathematical model do not even come close to the actual vascular patterns. Furthermore, because pseudo-vascular patterns generated on the basis of a mathematical model lack sufficient diversity, it is not feasible to use such pseudo-vascular patterns generated on the basis of a mathematical model in the evaluations of biometric authentication algorithms.

In view of the issue described above, the present disclosure discloses a technology capable of generating diverse pseudo-vascular patterns.

### Solution to Problem

A pseudo-vascular pattern generator in the present disclosure includes a processor. The processor generates a first random number based on a first random seed and to generate a second random number based on a second random seed that is different from the first random seed, generates a first image by adding first noise that is based on the first random number to a gray image, generates a second image by adding second noise that is based on the second random number to the gray image, generates a third image by combining the first image and the second image, and generates a pseudo-vascular pattern image that is an image including a pseudo-vascular pattern by using the third image.

### Advantageous Effects of Invention

With the technology according to the present disclosure, it is possible to generate diverse pseudo-vascular patterns.

### Brief Description of Drawings

FIG. 1 is a schematic illustrating a configuration example of a pseudo-vascular pattern generating system according to the present disclosure.
FIG. 2 is a schematic illustrating one example of the sequence of a process performed by a pseudo-vascular pattern generator according to the present disclosure.
FIG. 3 is a schematic illustrating one example of an image during a process of generating a pseudo-vascular pattern according to the present disclosure.
FIG. 4 is a schematic illustrating one example of an image during the process of generating a pseudo-vascular pattern according to the present disclosure.
FIG. 5 is a schematic illustrating one example of an image during the process of generating a pseudo-vascular pattern according to the present disclosure.
FIG. 6 is a schematic illustrating one example of an image during the process of generating a pseudo-vascular pattern according to the present disclosure.
FIG. 7 is a schematic illustrating one example of an image during the process of generating a pseudo-vascular pattern according to the present disclosure.
FIG. 8 is a schematic illustrating one example of an image during the process of generating a pseudo-vascular pattern according to the present disclosure.
FIG. 9 is a schematic illustrating one example of an image during the process of generating a pseudo-vascular pattern according to the present disclosure.
FIG. 10 is a schematic illustrating one example of an image during the process of generating a pseudo-vascular pattern according to the present disclosure.
FIG. 11 is a schematic illustrating one example of an image during the process of generating a pseudo-vascular pattern according to the present disclosure.
FIG. 12 is a schematic illustrating one example of an image during the process of generating a pseudo-vascular pattern according to the present disclosure.
FIG. 13 is a schematic illustrating results of FAR and FRR measurements from the pseudo-vascular patterns generated by the pseudo-vascular pattern generator according to the present disclosure.
FIG. 14 is a schematic illustrating results of FAR measurement from the pseudo-vascular patterns generated by the pseudo-vascular pattern generator according to the present disclosure.

### Embodiments for Carrying Out the Invention

An embodiment of the present disclosure will now be explained with reference to drawings. In the following embodiment, identical configurations are given the identical reference numerals.

### [Embodiment]

### <Configuration of Pseudo-Vascular Pattern Generating System>

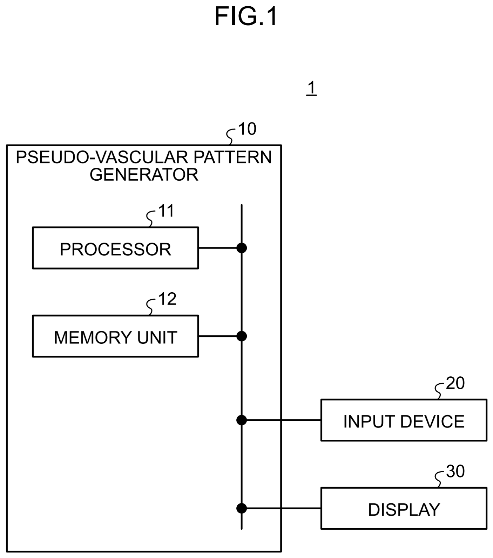

FIG. 1 is a schematic illustrating a configuration example of a pseudo-vascular pattern generating system according to the present disclosure.

In FIG. 1, this pseudo-vascular pattern generating system 1 includes a pseudo-vascular pattern generator 10, an input device 20, and a display 30. The input device 20 and the display 30 are connected to the pseudo-vascular pattern generator 10. Examples of the input device 20 include a pointing device such as a mouse, and a keyboard. One example of the display 30 includes a liquid crystal display (LCD).

The pseudo-vascular pattern generator 10 includes a processor 11 and a memory unit 12. Examples of the processor 11 include a central processing unit (CPU), a digital signal processor (DSP), a field-programmable gate array (FPGA), and an application-specific integrated circuit (ASIC). Examples of the memory unit 12 include a memory and a storage. The pseudo-vascular pattern generator 10 is implemented by a computer, for example.

### <Process Performed by Pseudo-Vascular Pattern Generator>

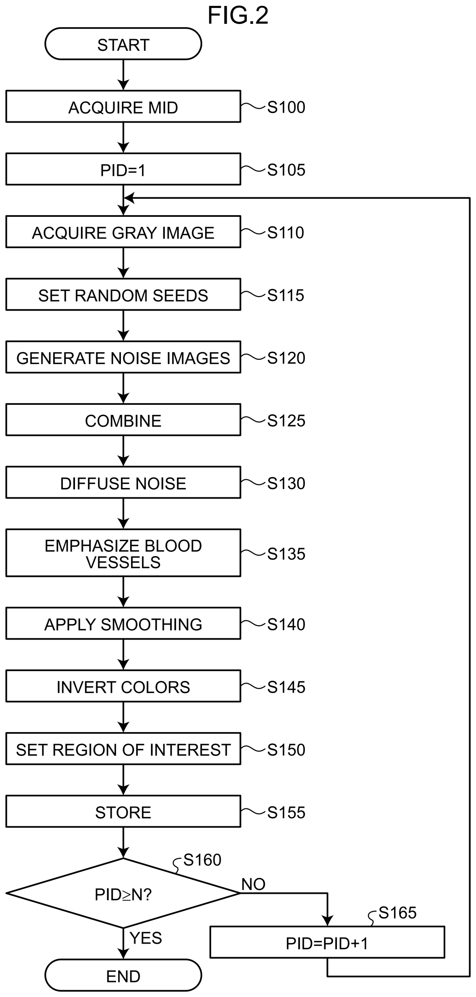

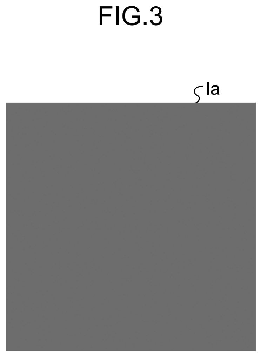

FIG. 2 is a schematic illustrating one example of the sequence of a process performed by the pseudo-vascular pattern generator according to the present disclosure. FIGS. 3 to 12 are schematics illustrating examples of images during a process of generating a pseudo-vascular pattern according to the present disclosure.

In FIG. 2, at Step S100, the processor 11 acquires a management ID (hereinafter sometimes referred to as "MID") from the memory unit 12. The management ID is input to the pseudo-vascular pattern generator 10 by an operator using the input device 20, and stored in the memory unit 12 in advance.

At Step S105, the processor 11 initializes the value of a personal ID (hereinafter sometimes referred to as "PID") to "1".

At Step S110, the processor 11 then acquires a gray image Ia (FIG. 3) having been stored in advance in the memory unit 12, from the memory unit 12. As the gray image Ia, assuming an example of an image having pixels each of which takes any one of 0 to 255 as a grayscale value, an image in which every pixel has 128, which is the value at the center of the range between 0 and 255, as the grayscale value, is stored in advance in the memory unit 12.

At Step S115, the processor 11 then sets a first random seed and a second random seed. The first random seed and the second random seed are random seeds that are different from each other, and the first random seed is mapped to a management ID, and the second random seed is mapped to a personal ID.

For example, a plurality of the first random seeds and a plurality of the second random seeds are stored in advance in the memory unit 12. Each of the first random seeds is different from the other first random seeds, and is mapped to corresponding one of a plurality of management IDs each of which is different from the other management IDs, in a one-to-one relation. Each of the second random seeds is also different from the other second random seeds, and is mapped to corresponding one of a plurality of personal IDs each of which is different from the others personal IDs, in a one-to-one relation. The processor 11 acquires the first random seed corresponding to the management ID acquired at Step S100, and acquires the second random seed corresponding to the current value of the personal ID, from the memory unit 12.

As another example, the processor 11 may also use the management ID acquired at Step S100 itself as the first random seed, and the current value of the personal ID itself as the second random seed.

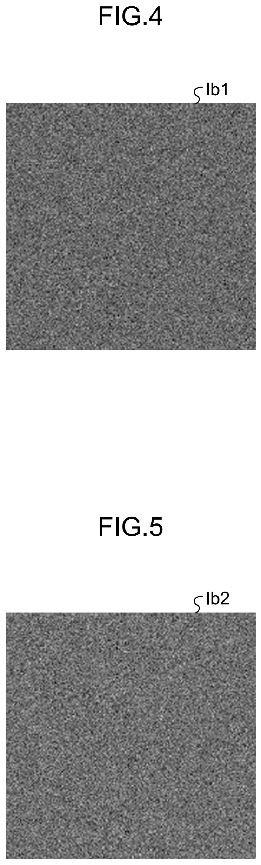

At Step S120, the processor 11 then generates a random number following a first normal distribution N (µ₁, σ₁²), on the basis of the first random seed, and generates a random number following a second normal distribution N (µ₂, σ₂²), on the basis of the second random seed. In the description hereunder, the random number generated on the basis of the first random seed will be sometimes referred to as "first random number", and the random number generated on the basis of the second random seed will be sometimes referred to as "second random number". At Step S120, the processor 11 adds white noise that is based on the first random number (hereinafter sometimes referred to as "first noise") to all of the pixels in the gray image Ia, and adds white noise that is based on the second random number (hereinafter sometimes referred to as "second noise") to all of the pixels in the gray image Ia. Because the first random seed and the second random seed are random seeds that are different from each other, the first noise and the second noise are white noise in which the conditions of the noise are different from each other. In the manner described above, an image resultant of adding the first noise to the gray image Ia (hereinafter sometimes referred to as "first noise image") Ib1 (FIG. 4) and an image resultant of adding the second noise to the gray image Ia (hereinafter sometimes referred to as "second noise image") Ib2 (FIG. 5) are generated.

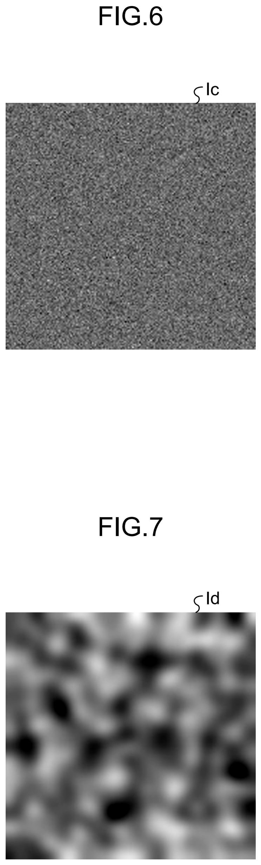

At Step S125, the processor 11 then combines the first noise image Ib1 and the second noise image Ib2. An image resultant of combining the first noise image Ib1 and the second noise image Ib2 (hereinafter sometimes referred to as "combined noise image") Ic (FIG. 6) is thus generated. The combined noise image Ic is an image that follows a normal distribution N (µ, σ²).

At Step S130, the processor 11 then diffuses the noise in the combined noise image Ic. The processor 11 generates an image resultant of diffusing the noise in the combined noise image Ic (hereinafter sometimes referred to as "noise-diffused image") Id (FIG. 7) by applying a Gaussian filter to the combined noise image Ic, for example.

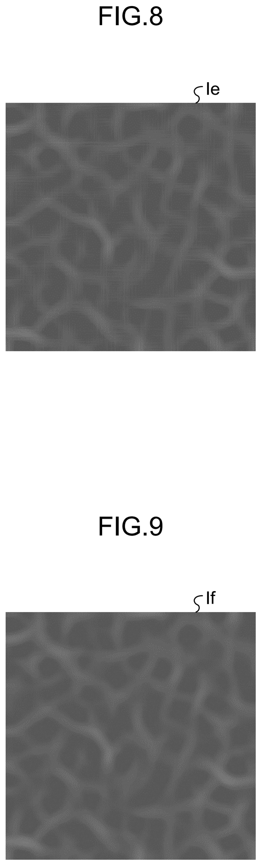

At Step S135, the processor 11 then emphasizes the blood vessels in the noise-diffused image Id. The processor 11 generates an image with the blood vessels emphasized in the noise-diffused image Id (hereinafter sometimes referred to as "blood-vessel emphasized image") Ie (FIG. 8) by applying a blood-vessel emphasizing filter such as a Frangi filter to the noise-diffused image Id, for example.

At Step S140, the processor 11 then applies smoothing to the blood-vessel emphasized image Ie. The processor 11 generates an image that is the blood-vessel emphasized image Ie applied with smoothing (hereinafter sometimes referred to as "smoothed image") If (FIG. 9), by smoothing the blood-vessel emphasized image Ie using a Gaussian filter, for example. The process at Step S140 may be omitted.

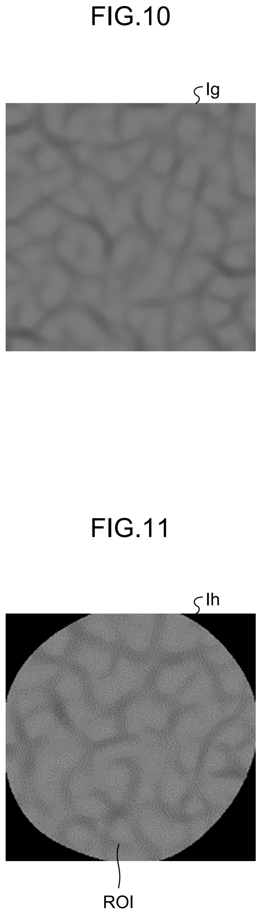

At Step S145, the processor 11 then inverts the colors of the smoothed image If. An image resultant of applying what is called negative-to-positive inversion to the smoothed image If (hereinafter sometimes referred to as "color-inverted image") Ig (FIG. 10) is thus generated. When the process at Step S140 is omitted, at Step S145, the processor 11 generates the color-inverted image Ig by inverting the colors of the blood-vessel emphasized image Ie. The process at Step S145 may be omitted.

At Step S150, the processor 11 then sets a region of interest (ROI) to the color-inverted image Ig. An image (hereinafter sometimes referred to as "region-of-interest set image") Ih (FIG. 11) resultant of setting a region of interest to the color-inverted image Ig is thus generated. An image inside the region of interest in the region-of-interest set image Ih serves as an image (hereinafter sometimes referred to as "pseudo-vascular pattern image") BV that includes a pseudo-vascular pattern. When the process at Step S145 is omitted, the processor 11 sets a region of interest to the smoothed image If at Step S150. When the processes at Step S140 and Step S145 are omitted, the processor 11 set a region of interest to the blood-vessel emphasized image Ie at Step S150.

At Step S155, the processor 11 then stores the region-of-interest set image Ih generated at Step S150, in the memory unit 12.

At Step S160, the processor 11 then determines whether the value of the PID has reached a predetermined value N. If the value of the PID has not reached the predetermined value N yet (No at Step S160), the control goes to Step S165. If the value of the PID has reached the predetermined value N (Yes at Step S160), the sequence of the process is ended.

At Step S165, the processor 11 increments the value of the PID by "1". After the process at Step S165, the control goes back to Step S110.

The processor 11 is configured to change the values of the first random seed and the second random seed set at Step S115, on the basis of the values of the MID and the PID, respectively.

For example, when the value of the MID is "A", the processor 11 sets the value of the first random seed to "SA". When the value of the MID is "B", the processor 11 sets the value of the first random seed to "SB". When the value of the MID is "C", the processor 11 sets the value of the first random seed to "SC". When the value of the PID is "1", the processor 11 sets the value of the second random seed to "S1". When the value of the PID is "2", the processor 11 sets the value of the second random seed to "S2". When the value of the PID is "3", the processor 11 sets the value of the second random seed to "S3".

In the manner described above, the first random seed takes a different value depending on the value of the MID, and the second random seed takes a different value depending on the value of the PID.

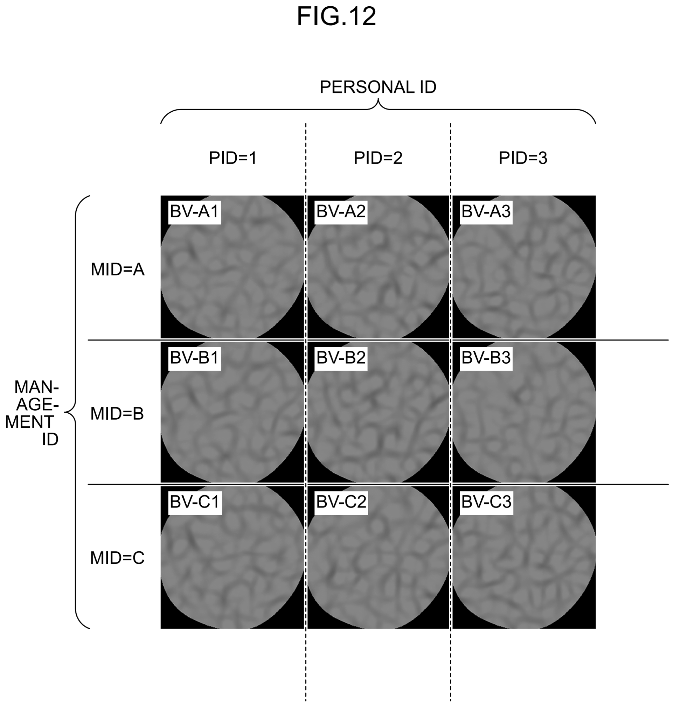

On the basis of the above, assuming an example in which the value of the MID acquired at Step S100 is "A", and the predetermined value N is set to "3", when the value of the PID is "1", a first pseudo-vascular pattern image BV-A1 that is based on the first random seed "SA" and the second random seed "S1" is generated; when the value of the PID is "2", a second pseudo-vascular pattern image BV-A2 that is based on the first random seed "SA" and the second random seed "S2" is generated; and when the value of the PID is "3", a third pseudo-vascular pattern image BV-A3 that is based on the first random seed "SA" and the second random seed "S3" is generated, as illustrated in FIG. 12.

Assuming another example in which the value of the MID acquired at Step S100 is "B", and the predetermined value N is set to "3", when the value of the PID is "1", a fourth pseudo-vascular pattern image BV-B1 that is based on the first random seed "SB" and the second random seed "S1" is generated; when the value of the PID is "2", a fifth pseudo-vascular pattern image BV-B2 that is based on the first random seed "SB" and the second random seed "S2" is generated; and when the value of the PID is "3", a sixth pseudo-vascular pattern image BV-B3 that is based on the first random seed "SB" and the second random seed "S3" is generated, as illustrated in FIG. 12.

Assuming still another example in which the value of the MID acquired at Step S100 is "C", and the predetermined value N is set to "3", when the value of the PID is "1", a seventh pseudo-vascular pattern image BV-C1 that is based on the first random seed "SC" and the second random seed "S1" is generated; when the value of the PID is "2", an eighth pseudo-vascular pattern image BV-C2 that is based on the first random seed "SC" and the second random seed "S2" is generated; and when the value of the PID is "3", a ninth pseudo-vascular pattern image BV-C3 that is based on the first random seed "SC" and the second random seed "S3" is generated, as illustrated in FIG. 12.

These nine pseudo-vascular pattern images BV, from the first pseudo-vascular pattern image BV-A1 to the ninth pseudo-vascular pattern image BV-C3, are pseudo-vascular pattern images BV generated from a plurality of combined noise images Ic, respectively, each of which is different from the others, the combined noise images Ic being generated on the basis of a plurality of different combinations of the first random seed and the second random seed, respectively, each being different from the others. Therefore, the set of feature points included in the pseudo-vascular pattern in each of these nine pseudo-vascular pattern images BV, which are the first pseudo-vascular pattern image BV-A1 to the ninth pseudo-vascular pattern image BV-C3, are different from those of the other pseudo-vascular pattern images BV.

The operator can set the predetermined value N using the input device 20. The operator can also visually check the pseudo-vascular pattern images BV using the display 30.

### <Combining First Noise Image and Second Noise Image>

Because the processor 11 is configured to generate the combined noise image Ic following the normal distribution N (µ, σ²) by combining the first noise image Ib1 generated on the basis of the first normal distribution N (µ₁, σ₁²) and the second noise image Ib2 generated on the basis of the second normal distribution N (µ₂, σ₂²) (where µ₁ ≤ µ₂ and σ₁² ≤ σ₂²), weights are set to the average and the variance of the normal distribution that can be generated from the respective random seeds, which are the first random seed and the second random seed. A method for setting a weight (hereinafter sometimes referred to as "average weight") wₐ (where 0 ≤ wₐ ≤ 1) for the average of the normal distribution, and a method for setting a weight (hereinafter sometimes referred to as "variance weight") w_{b} (where 0 ≤ w_{b} ≤ 1) for the variance of the normal distribution will be explained separately.

### <Method for Setting Average Weight>

If µ₁ = 0, µ₂ = 0, and µ ≠ 0, because it is difficult to set the average weight wₐ, the processor 11 re-sets one of µ₁ and µ₂.

If µ₁ ≤ µ ≤ µ₂, the processor 11 sets an average weight wₐ satisfying a weighted average (wₐµ₁ + (1 - wₐ)µ₂ = µ) to µ₁ and µ₂. In particular, when µ₁ = µ = µ₂, because any average weight wₐ satisfies the weighted average (wₐµ₁ + (1 - wₐ)µ₂ = µ), the processor 11 sets the average weight wₐ, taking the effects of the first normal distribution N (µ₁, σ₁²) and the second normal distribution N (µ₂, σ₂²) generated from the respective random seeds, which are the first random seed and the second random seed, into consideration.

If µ < µ₁ or µ₂ < µ, because there is no value satisfying the weighted average (wₐµ₁ + (1 - wₐ)µ₂ = µ) within the domain of the average weight wₐ, the processor 11 sets either one of µ₁ and µ₂ to such a value that both of the conditions µ₁ ≤ µ and µ ≤ µ₂ are satisfied.

### <Method for Setting Variance Weight>

If σ₁² ≤ σ² ≤ σ₂², the processor 11 sets a variance weight w_{b} satisfying a weighted average (w_{b}σ₁² + (1 - w_{b})σ₂² = σ²) to σ₁² and σ₂². In particular, when σ₁² = σ² = σ₂², because any variance weight w_{b} satisfies the weighted average (w_{b}σ₁² + (1 - w_{b})σ₂² = σ²), the processor 11 sets the variance weight w_{b}, taking the effects of the first normal distribution N (µ₁, σ₁²) and the second normal distribution N (µ₂, σ₂²) generated from the respective random seeds, which are the first random seed and the second random seed, into consideration.

If σ² < σ₁² or σ₂² < σ², because there is no value satisfying the weighted average (w_{b}σ₁² + (1 - w_{b})σ₂² = σ²) within the domain of the variance weight w_{b}, the processor 11 sets either one of σ₁² or σ₂² to a such value that both of the conditions σ₁² ≤ σ² and σ² ≤ σ₂² are satisfied.

### <False Accept Rate (FAR) and False Reject Rate (FRR) >

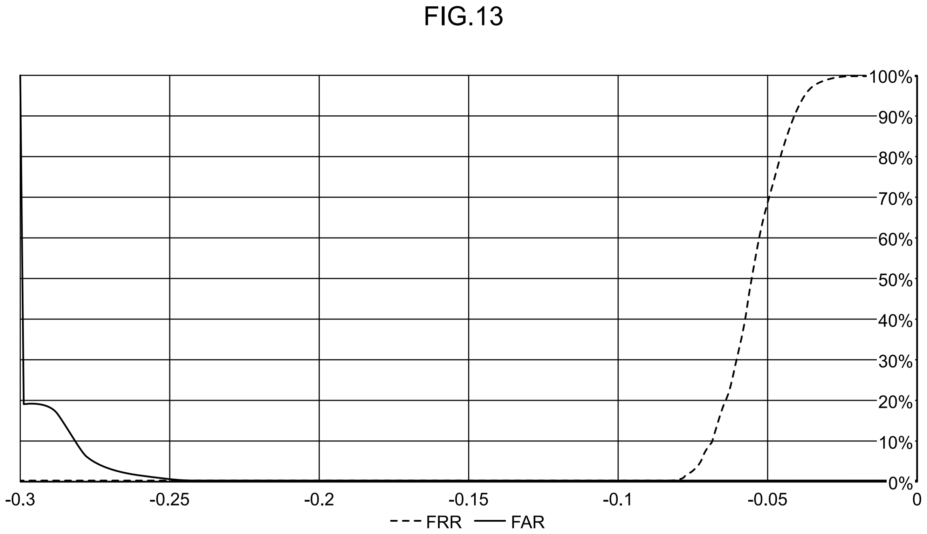

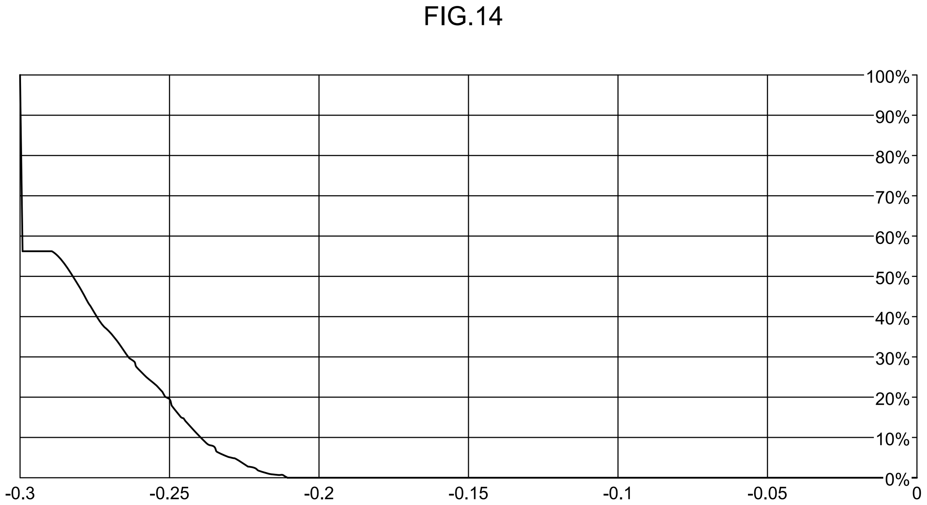

FIG. 13 is a schematic illustrating results of FAR and FRR measurements from the pseudo-vascular patterns generated by the pseudo-vascular pattern generator according to the present disclosure. FIG. 14 is a schematic illustrating results of FAR measurement from the pseudo-vascular patterns generated by the pseudo-vascular pattern generator according to the present disclosure.

For the FAR and FRR measurements illustrated in FIG. 13, the pseudo-vascular pattern generator 10 was caused to generate 1,000 pseudo-vascular pattern images BV by causing the MID to take a single value, and changing the PID to take 1000 different values by setting the predetermined value N to "1000". Each of the pseudo-vascular pattern images BV was then subjected to three types of geometry conversions different from one another. Handling two pieces of data for registering the pseudo-vascular pattern images BV to a database (hereinafter sometimes referred to as "registered data") and one piece of data to be matched with the data registered in the database (hereinafter sometimes referred to as "matching data") as a set, the pseudo-vascular pattern images BV being those resulting from applying the three types of geometry conversions to each of the pseudo-vascular pattern images BV, that is, handling the three pieces of data in total as a set, 1,000 sets of pseudo-vascular pattern images BV after the geometry conversions were generated.

For the FAR measurements illustrated in FIG. 14, the pseudo-vascular pattern generator 10 was caused to generate 2,000 pseudo-vascular pattern images BV by changing the MID to take two different values, and changing the PID to take 1000 different values by setting the predetermined value N to "1000". Each of the pseudo-vascular pattern images BV corresponding to the first MID was then subjected to two geometric conversions different from each other, and the results of the respective geometric conversions were mapped to two pieces of registered data, respectively. Each of the pseudo-vascular pattern images BV corresponding to the second MID was subjected to a geometric conversion different from the above-mentioned two geometric conversions, and the result of this geometric conversion was mapped to a piece of matching data. Handling the two pieces of registered data and one piece of matching data resulting from applying the geometry conversions to the respective pseudo-vascular pattern images BV having the same PID, that is, three pieces of data in total, as a set, 1,000 sets of the pseudo-vascular pattern images BV after the geometry conversions were generated.

FIG. 13 illustrates results of FAR measurements collected from 999,000 sets of pseudo-vascular pattern images BV resultant of re-arranging the 1,000 sets of pseudo-vascular pattern images BV after the geometric conversions, in such a manner that the pieces of registered data and the matching data in the same set have the same MID but PIDs different from one another. FIG. 13 also illustrates results of FRR measurements collected from the 1,000 sets of pseudo-vascular pattern images BV after the geometric conversions, the 1,000 sets being sets of pieces of registered data and a piece of matching data having the same MID and the same PID (that is, 1,000 sets before the re-arrangement). In the measurement results illustrated in FIG. 13, FAR was 0% within a range of -0.173 or higher, and FRR was 0% within a range of -0.091 or below.

FIG. 14 illustrates results of FAR measurements collected from the 1,000 sets of pseudo-vascular pattern images BV after the geometric conversions, the 1,000 sets being sets of registered data and matching data having the MIDs that are different from each other but having the same PID (that is, 1,000 sets before the re-arrangement). In the measurement results illustrated in FIG. 14, FAR was 0% within a range -0.198 or higher.

On the basis of the measurements results illustrated in FIGS. 13 and 14, it can be seen that the pseudo-vascular patterns included in the pseudo-vascular pattern images generated by the pseudo-vascular pattern generator 10 have diversity, and meet the ideal conditions of the FAR and the FRR, which are main indices used in the evaluations of biometric authentication algorithms.

The embodiment has been explained so far.

As described above, the pseudo-vascular pattern generator according to the present disclosure (the pseudo-vascular pattern generator 10 in the embodiment) includes a processor (the processor 11 in the embodiment). The processor is configured to generate a first random number on the basis of a first random seed, and to generate a second random number on the basis of a second random seed that is different from the first random seed; to generate a first image (the first noise image Ib1 in the embodiment) by adding first noise that is based on the first random number to a gray image (the gray image Ia in the embodiment); and to generate a second image (the second noise image Ib2 in the embodiment) by adding second noise that is based on the second random number to the gray image. The processor is also configured to generate a third image (the combined noise image Ic in the embodiment) by combining the first image and the second image, and generates a pseudo-vascular pattern image (pseudo-vascular pattern image BV in the embodiment) using the third image.

For example, the processor is configured to generate a fourth image (the noise-diffused image Id in the embodiment) in which noise included in the third image is diffused; to generate a fifth image (the blood-vessel emphasized image Ie in the embodiment) resultant of applying a blood vessel emphasizing filter to the fourth image; and to generate the pseudo-vascular pattern image by setting a region of interest to the fifth image.

In this manner, it is possible to generate diverse pseudo-vascular patterns.

Furthermore, the first random seed is mapped to a management ID, and the second random seed is mapped to a personal ID.

In this manner, it is possible to generate diverse pseudo-vascular patterns, by using the same set of personal IDs each of which is different from the other personal IDs, in subordinate of each of a plurality of management IDs each of which is different from the other management IDs. In this manner, the same set of personal IDs can be used many times in the generation of pseudo-vascular patterns. Therefore, it is possible to prevent shortage of the personal IDs for the pseudo-vascular patterns. It is also possible to simplify the management of the pseudo-vascular patterns, by allowing management of the pseudo-vascular patterns using the management IDs.

The processor is also configured to generate a third image by combining a first image that is based on a first normal distribution (the first normal distribution N (µ₁, σ₁²) in the embodiment) and a second image that is based on a second normal distribution (the second normal distribution N (µ₂, σ₂²) in the embodiment).

For example, the processor sets a first weight for an average of the normal distribution (the average weight wₐ in the embodiment) and a second weight for a variance of the normal distribution (variance weight w_{b}) when generating the third image.

In this manner, it is possible to generate a third image following a normal distribution, by combining the first image and the second image.

### Reference Signs List

- 1: pseudo-vascular pattern generating system
- 10: pseudo-vascular pattern generator
- 11: processor
- 12: memory unit

## Claims

1. A pseudo-vascular pattern generator comprising a processor configured: to generate a first random number based on a first random seed and to generate a second random number based on a second random seed that is different from the first random seed; to generate a first image by adding first noise that is based on the first random number to a gray image; to generate a second image by adding second noise that is based on the second random number to the gray image; to generate a third image by combining the first image and the second image; and to generate a pseudo-vascular pattern image that is an image including a pseudo-vascular pattern by using the third image.

2. The pseudo-vascular pattern generator according to claim 1, wherein the processor is further configured:
to generate a fourth image in which noise included in the third image is diffused;
to generate a fifth image resultant of applying a blood vessel emphasizing filter to the fourth image; and
to generate the pseudo-vascular pattern image by setting a region of interest to the fifth image.

3. The pseudo-vascular pattern generator according to claim 1, wherein the first random seed is mapped to a management ID, and the second random seed is mapped to a personal ID.

4. The pseudo-vascular pattern generator according to claim 1, wherein the processor is configured to generate the third image by combining the first image that is based on a first normal distribution and the second image that is based on a second normal distribution.

5. The pseudo-vascular pattern generator according to claim 4, wherein the processor is configured to set a first weight for an average of a normal distribution and a second weight for a variance of the normal distribution before when the third image.

6. A pseudo-vascular pattern generating method comprising:
generating a first random number based on a first random seed;
generating a second random number based on a second random seed that is different from the first random seed;
generating a first image by adding first noise that is based on the first random number to a gray image;
generating a second image by adding second noise that is based on the second random number to the gray image;
generating a third image by combining the first image and the second image; and
generating an image including a pseudo-vascular pattern by using the third image.
